Europäisches Patentamt

European Patent Office

Office européen des brevets

(19)

(11) Veröffentlichungsnummer: **0 253 246**
**A2**

# (12) EUROPÄISCHE PATENTANMELDUNG

(21) Anmeldenummer: **87109650.9**

(22) Anmeldetag: **04.07.87**

(51) Int. Cl.⁴: **B01D 23/28**

(30) Priorität: **16.07.86 DE 3623952**

(43) Veröffentlichungstag der Anmeldung:
**20.01.88 Patentblatt 88/03**

(84) Benannte Vertragsstaaten:
**AT BE CH DE ES FR GB IT LI NL SE**

(71) Anmelder: **Woltermann, Erich H.**
**Ameisenweg 3**
**D-4950 Minden(DE)**

(72) Erfinder: **Woltermann, Erich H.**
**Ameisenweg 3**
**D-4950 Minden(DE)**

(74) Vertreter: **Patentanwälte Dr. Solf & Zapf**
**Schlossbleiche 20 Postfach 13 01 13**
**D-5600 Wuppertal 1(DE)**

(54) **Filter zum portionierten Aufbrühen von Kaffee oder Tee.**

(57) Die Erfindung betrifft einen Filter für portioniertes Aufbrühen von Kaffee oder Tee, bestehend aus einem eine obere Einfüllöffnung aufweisenden, etwa becherförmigen Stützbehältnis mit einem Flüssigkeits-Füllraum mit unterer Auslaßöffnung und einem im Stützbehältnis oberhalb der Auslaßöffnung angeordneten Filtereinsatz, wobei der Filtereinsatz (5) aus einem Filtervlies besteht und etwa parallel zur Innenwand des Stützbehältnisses (1) verläuft sowie im Randbereich der Einfüllöffnung (2) umfangsgemäß mit dem Stützbehältnis (1) verbunden ist.

FIG. 1

EP 0 253 246 A2

## Filter zum portionierten Aufbrühen von Kaffee oder Tee

Die vorliegende Erfindung betrifft einen Filter zum portionierten Aufbrühen von Kaffee oder Tee, bestehend aus einem eine obere Einfüllöffnung aufweisenden, etwa becherförmigen Stützbehältnis mit einem Flüssigkeitsfüllraum mit unterer Auslaßöffnung und einem im Stützbehältnis oberhalb der Auslaßöffnung angeordneten Filtereinsatz.

Die bekannten Filter zum portionsweisen Aufbrühen von Kaffee oder Tee besitzen einen Filtereinsatz, der als beidseitig des Kaffeemehls horizontal angeordnetes Filtervlies ausgebildet ist, zwischen dem das portionsweise abgemessene Kaffeemehl liegt. Durch diese Anordnung ist aber keine optimale Ausnutzung des Kaffeemehls beim Aufgießen des Kaffees gewährleistet. Die bekannten, bereits mit Kaffeemehl gefüllten Filter werden in Großpackungen abgepackt, wobei diese Großpackungen luftdicht ausgebildet und ggf. mit Schutzgas gefüllt sind, um einen Aromaverlust des Kaffeemehls während der Lagerung zu vermeiden. Beim Öffnen der Großpackung für das Entnehmen eines einzelnen Filters ist aber nunmehr kein Aromaverschluß für die übrigen in der Großpackung noch befindlichen gefüllten Filter gegeben, so daß bei einer längeren Aufbrauchzeit sich die Qualität des Kaffees verschlechtert.

Der vorliegenden Erfindung liegt die Aufgabe zugrunde, ausgehend von einem Filter der eingangs beschriebenen Art, diesen derart zu verbessern, daß das im Filter befindliche Kaffeepulver optimal ausgenutzt sowie weiterhin sichergestellt wird, daß auch bei langer Lagerung die Kaffeequalität sich nicht verändert. Weiterhin soll sich der erfindungsgemäße Filter durch eine kostengünstige, vollautomatische Herstellung und Abpackung auszeichnen.

Erfindungsgemäß wird dies dadurch erreicht, daß der Filtereinsatz aus einem Filtervlies besteht und etwa parallel zur Innenwand des Stützbehältnisses verläuft sowie im Randbereich der Einfüllöffnung umfangsgemäß mit dem Stützbehältnis verbunden ist. Durch diese Ausgestaltung ergibt sich eine Wirkung des erfindungsgemäßen Filters,wie sie bei bekannten Haushaltsfiltern vorhanden ist, so daß das Kafeemehl optimal beim Aufgießen des Filters ausgenutzt wird. Jedoch bilden Stützbehältnis und Filtereinsatz erfindungsgemäß eine Einheit, so daß ein separates Einlegen des Filtereinsatzes nicht erforderlich ist. Die erfindungsgemäße Ausgestaltung des Filtervlieses gemäß den Unteransprüchen 2 bis 4 gewährleistet einerseits die Herstellung des Filtereinsatzes als Tiefziehteil, so daß eine kostengünstige Herstellung gewährleistet ist, und anderseits die Aufrechterhaltung der vollen Filtereigenschaften nach dem Tiefziehvorgang, wobei die Geschmacksneutralität des Filtervlieses und des Stützbehältnisses gewährleistet wird.

Weiterhin wird durch die Materialbeschaffenheit des erfindungsgemäßen Filtereinsatzes in Verbindung mit der Beschichtung des Stützbehältnisses an der Innenseite mit einer Polyäthylenschicht die Möglichkeit geschaffen, Filtereinsatz und Stützbehältnis im Verbindungsbereich durch Siegeln, d.h. z. B. Heißversiegeln, miteinander zu verbinden, wodurch sich ebenfalls sehr geringe Produktionskosten ergeben. Zudem gewährleistet diese Verbindung eine sichere Verbindung zwischen diesen beiden Teilen ohne zusätzliche Materialien.

Die Erfindung umfaßt weiterhin die Schaffung einer Verpackung, mit der mit Kaffee oder Tee gefüllte erfindungsgemäße Filter über lange Zeit gelagert werden können, ohne daß Aromaverluste entstehen, und darüber hinaus die portionsweise abgefüllten Filter benutzt werden können, ohne daß hierdurch die Haltbarkeit der nicht benutzten gefüllten Filter beeinträchtigt wird. Erfindungsgemäß wird dies dadurch erreicht, daß der erfindungsgemäße Filter luftdicht in einer Einzelpackung eingeschlossen ist. Vorteilhafte Ausführungsformen der Einzelpackungen sind in den Unteransprüchen 10 bis 18 enthalten. Die erfindungsgemäße Ausgestaltung stellt dabei eine kostengünstige industrielle Fertigung sicher und gleichzeitig eine Aufbewahrung des innerhalb der Packung befindlichen abgefüllten Kaffeemehls oder Tees ohne Beeinträchtigung von Sauerstoff und Wasserdampf. Darüber hinaus eignet sich die erfindungsgemäße Verpackung auch dafür, als Mehrfachverpackung, beispielsweise als Sechserpack, hergestellt zu werden.

Anhand der in den beiliegenden Zeichnungen dargestellten Ausführungsbeispiele wird die Erfindung nunmehr näher erläutert. Es zeigen:

Fig. 1 einen Schnitt durch einen erfindungsgemäßen Filter im abgepackten Zustand,

Fig. 2 eine Ansicht auf einen Sechserpack aus Filtern gemäß Fig. 1.

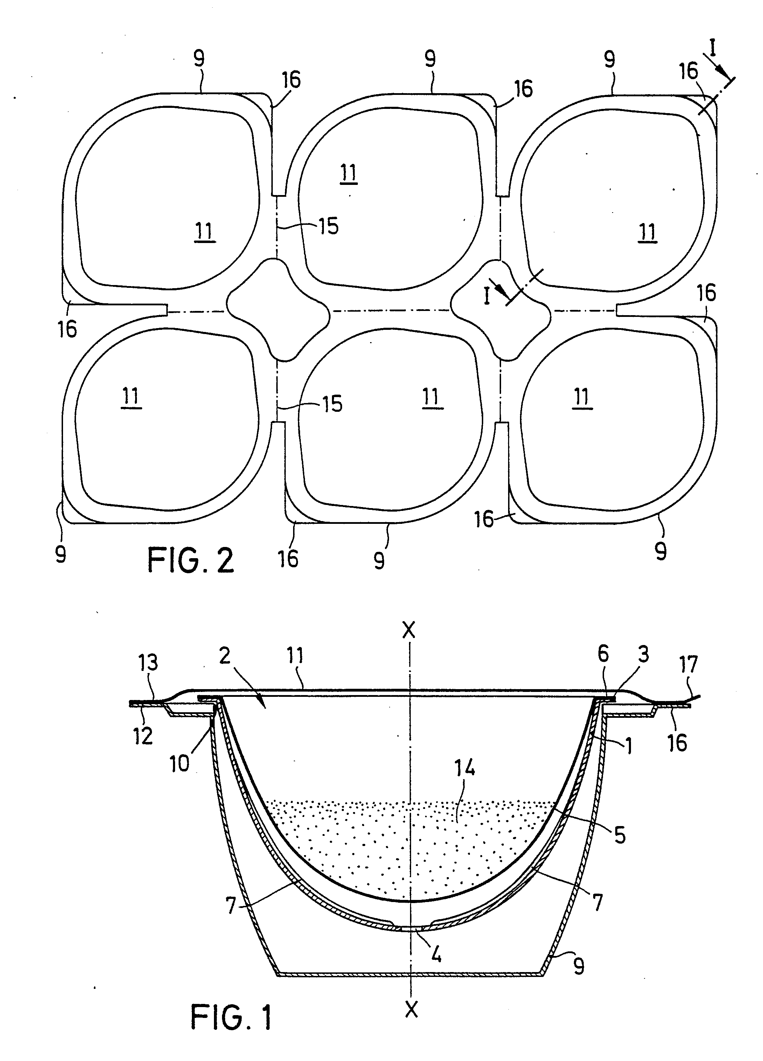

Wie sich aus Fig. 1 ergibt, besteht ein erfindungsgemäßer Filter aus einem Stützbehältnis 1, das im dargestellten Beispiel als Becher ausgebildet ist und eine kreisförmige Einfüllöffnung 2 aufweist. Das Stützbehältnis ist aus einer Folie aus Polystyrol hergestellt, und zwar vorzugsweise im Tiefziehverfahren, wobei auf der Innenseite des Stützbehältnisses 1 die Polystyrol-Folie eine Beschichtung aus Polyäthylen aufweist. Das Stützbehältnis 1 weist einen die Einfüllöffnung 2 umfassenden äußeren Rand 3 auf, der etwa senkrecht zur Behältnisachse XX verläuft. Weiterhin weist das Stützbehältnis 1 eine Auslaßöffnung 4 auf, die konzentrisch zur Einlauföffnung 2 angeordnet ist und durch deren Mittelpunkt die Achse XX verläuft. Innerhalb des Stützbehältnisses 1 ist ein Filtereinsatz 5 angeordnet, der aus einem Filtervlies hergestellt ist. Der Filtereinsatz 5 ist in seiner Form der Form des Stützbehältnisses 1 angepaßt, so daß er etwa parallel zu der Wandung des Stützbehältnisses 1 verläuft. Der Filtereinsatz 5 ist als Tief ziehteil ausgebildet und besteht vorzugsweise aus einem Material, das einen 60- bis 70%-igen, vorzugsweise 65%-igen, Polyesterfaseranteil und einen 30 bis 40%-igen, vorzugsweise 35%-igen, Polypropylenfaseranteil aufweist. Aufgrund dieser Ausgestaltung besitzt der Filtereinsatz die Eigenschaften, daß er reißfest ist sowie lebensmittelphysiologisch unbedenklich und ebenfalls siegelfähig ist. Dabei dient die Verwendung des Polypropylenmaterials zur Sicherstellung der Versiegelungseigenschaften. Der Filtereinsatz 5 ist mit dem Stützbehältnis im oberen Randbereich umfangsgemäß verbunden. Hierbei ist es vorteilhaft, wenn diese Verbindung im Siegelververfahren erfolgt, wozu der Filtereinsatz derart ausgebildet ist, daß er auf dem umlaufenden Rand 3 endet und dort mit dem Stützbehältnis durch Versiegelung verbunden ist. Dabei dient die innere Polyäthylenschicht der Stützfolie des Stützbehältnisses 1 zur Versiegelung zwischen dem Filtereinsatz 5 und dem Stützbehältnis. Der Versiegelungsbereich ist in der Figur mit der Ziffer 6 gekennzeichnet. In der Wandung des Stützbehältnisses 1 sind - ausgehend von der Auslaßöffnung 4 -radial verlaufende, sich nach oben hin zur Einfüllöffnung 2 erstreckende Rinnen 7 ausgebildet. Dabei kann eine Vielzahl von Rinnen 7 am Umfang des Stützbehältnisses 1 ausgebildet sein, wobei die Rinnen 7 zur Innenseite des Stützbehältnisses 1 hin offen sind. Diese Rinnen 7 dienen einerseits dazu, Kaffeeflüssigkeit, die aus dem Filtereinsatz 5 austritt, zur Auslaßöffnung 4 hinzuleiten, und andererseits wird hierdurch eine Versteifung des Stützbehältnisses 1 bewirkt.

Der vorstehend aus Stützbehältnis und Filtereinsatz bestehende Filter wird - wie aus der Figur weiterhin zu ersehen ist - innerhalb einer Verpackung luftdicht aufbewahrt. Diese Verpackung besteht aus einer Einzelpackung, aus einem Aufnahmebehältnis 9, dessen obere Öffnung 10 mit einer Deckelfolie 11 luftdicht verschlossen ist. Dabei ist es vorteilhaft, wenn der Innenraum des Aufnahmebehältnisses 9 mit einem Schutzgas - wie beispielsweise Stickstoff oder Kohlendioxid - gefüllt ist. Das Aufnahmebehältnis 9 besteht aus einer Folie, die gasundurchlässig für Sauerstoff und Wasserdampf ist. Dabei wird vorzugsweise eine Mehrschichtfolie verwendet, die aus einer Trägerfolie aus PVC besteht, auf der eine Polyäthylenfolie und auf dieser eine Folie aus Eval und hierauf wiederum eine Polyäthylenfolie aufgebracht sind. Die PVC-Trägerfolie hat eine Dicke von 300 bis 400 µ. Die Dicke der übrigen drei Folien zusammen beträgt 65 bis 75 µ, vorzugsweise 70 µ.

Bei der Folie aus Eval handelt es sich um Äthylenvinylalkohol. Diese Folie bewirkt im wesentlichen die Gasdichtigkeit, wobei eine Gasdichtigkeit von 0,01 % erreicht wird. Bei der Deckelfolie handelt es sich um eine Aluminiumfolie mit einer Dicke von vorzugsweise 40 µ, die einseitig mit einer Polyäthylenschicht von ca. 30 µ beschichtet ist, und zwar auf der dem Innenraum des Aufnahmebehältnisses 9 zugekehrten Seite. Das Aufnahmebehältnis 9 weist einen umlaufenden Ringkragen 12 auf, auf dem die Deckelfolie 11 vorzugsweise durch Siegelung befestigt ist. Diese Siegelung erfolgt zwischen der PE-Beschichtung der Deckelfolie und der innersten PE-Schicht der Mehrschichtfolie des Aufnahmebehältnisses. Die Breite des Siegelbereiches 13, d.h. des Siegelspaltes, zwischen Deckelfolie und Ringkragen 12 des . Aufnahmebehältnisses 9 beträgt vorzugsweise 3 bis 4 mm. Wie weiterhin aus Fig. 1 zu erkennen ist, liegt das Stützbehältnis 1 mit seinem umlaufenden Rand 3 auf dem Ringkragen 12 außerhalb des Siegelbereiches 13 auf. Wie weiterhin aus Fig. 1 zu erkennen ist, ist innerhalb des Stützbehältnisses 1 eine Füllung 14, beispielsweise aus Kaffeemehl, enthalten.

Fig. 2 zeigt die Verbindung der Einzelpackung gemäß Fig. 1 zu einem Sechserpack, wobei die einzelnen Aufnahmebehältnisse 9 als einheitliches Tiefziehteil ausgebildet sind und mit einer durchgehenden Deckelfolie abgedeckt sind. Zwischen den einzelnen Aufnahmebehältnissen sind linienförmige Anstanzungen 15 ausgebildet, die als Sollbruchstellen dienen und somit einerseits ein Trennen der Behältnisse voneinander ermöglichen und andererseits auch ein Abtrennen der Deckelfolie nur im Bereich, der durch die Anstanzungen 15 bestimmt wird. Hierbei ermöglicht die Siegelverbindung im Siegelbereich 13 ein Abziehen der Deckelfolie 11. Um dieses Abziehen zu erleichtern, weist jedes Aufnahmebehältnis 9 an seinem Ringkragen 12 einen oder zwei siegelbereichfreie Fortsätze 16 auf, so daß dort eine Abziehlasche 17 an der Deckelfolie 11 entsteht.

## Ansprüche

1. Filter für portioniertes Aufbrühen von Kaffee oder Tee, bestehend aus einem eine obere Einfüllöffnung aufweisenden, etwa becherförmigen Stützbehältnis mit einem Flüssigkeits-Füllraum mit unterer Auslaßöffnung und einem im Stützbehältnis oberhalb der Auslaßöffnung angeordneten Filtereinsatz,

dadurch gekennzeichnet, daß der Filtereinsatz (5) aus einem Filtervlies besteht und etwa parallel zur Innenwand des Stützbehältnisses (1) verläuft sowie im Randbereich der Einfüllöffnung (2) umfangsgemäß mit dem Stützbehältnis (1) verbunden ist.

2. Filter nach Anspruch 1, dadurch gekennzeichnet, daß das Filtervlies als Tiefziehteil ausgebildet ist und aus reißfestem, lebensmittelphysiologisch unbedenklichem Material besteht.

3. Filter nach Anspruch 2, dadurch gekennzeichnet, daß das Filtervlies aus siegelfähigem Material besteht und die umfangsgemäße Verbindung zwischen dem Filtervlies und dem Stützbehältnis (1) aus einer Siegelverbindung besteht.

4. Filter nach Anspruch 2 oder 3, dadurch gekennzeichnet, daß das Filtervlies aus ca. 60 bis 70 % Polyesterfaseranteil und ca. 30 bis 40 % Polypropylenfaseranteil besteht.

5. Filter nach einem oder mehreren der Ansprüche 1 bis 4, dadurch gekennzeichnet, daß das Stützbehältnis (1) aus einer Folie aus Polystyrol besteht und an seiner Innenseite eine Schicht aus Polyäthylen aufweist.

6. Filter nach einem oder mehreren der Ansprüche 1 bis 5, dadurch gekennzeichnet, daß in der Wandung des Stützbehältnisses (1) von der Auslaßöffnung (4) radial ausgehende, in Richtung auf die Einfüllöffnung (2) verlaufende, zum Behältnisinnenraum offene Rinnen (7) eingeprägt sind.

7. Filter nach einem oder mehreren der Ansprüche 1 bis 6, dadurch gekennzeichnet, daß die Einfüllöffnung (2) des Stützbehältnisses (1) von einem etwa rechtwinklig zur Behältnisachse (XX) verlaufenden Rand (3) umgeben ist.

8. Filter nach Anspruch 7, dadurch gekennzeichnet, daß das Filtervlies im Bereich des Randes (3) mit dem Stützbehältnis (1) insbesondere durch eine Siegelschicht (6) verbunden ist.

9. Filter nach einem oder mehreren der Ansprüche 1 bis 8, gekennzeichnet durch eine den Filter gasdicht einschließende Einzelpackung.

10. Filter nach Anspruch 9, dadurch gekennzeichnet, daß die Einzelpackung aus einem das Stützbehältnis (1) umfassenden Aufnahmebehältnis (9) besteht, dessen obere Öffnung (10) mit einer Deckelfolie (11) gasdicht verschlossen ist.

11. Filter nach Anspruch 9 oder 10, dadurch gekennzeichnet, daß der verschlossene innere Raum der Einzelpackung mit einem Schutzgas, vorzugsweise Stickstoff oder Kohlendioxid, gefüllt ist.

12. Filter nach Anspruch 10 oder 11, dadurch gekennzeichnet, daß das Aufnahmebehältnis (9) aus einer gas-oder wasserdampfundurchlässigen Mehrschichtfolie hergestellt ist.

13. Filter nach Anspruch 12, dadurch gekennzeichnet, daß die Mehrschichtfolie aus einer Trägerfolie aus Polyvinylchlorid besteht, die die Außenseite der Wandung des Aufnahmebehältnisses (9) bildet, auf der in Folge eine Polyäthylenfolie, eine Äthylenvinylalkohol-Folie und wiederum eine Polyäthylenfolie aufgebracht sind.

14. Filter nach Anspruch 13, dadurch gekennzeichnet, daß die Polyvinylchlorid Folie eine Dicke von 300 bis 400 μ, vorzugsweise 350 μ, und die übrigen drei Folien zusammen eine Dicke von 65 bis 75 μ, vorzugsweise 70 μ, aufweisen.

15. Filter nach einem oder mehreren der Ansprüche 10 bis 14, dadurch gekennzeichnet, daß die Deckelfolie (11) aus einer Aluminiumfolie besteht, die an der der Innenseite des Aufnahmebehältnisses (9) zugekehrten Seite eine Polyäthylenbeschichtung besitzt.

16. Filter nach einem oder mehreren der Ansprüche 10 bis 15, dadurch gekennzeichnet, daß das Aufnahmebehältnis (9) einen die obere Öffnung (10) umfassenden Ringkragen (12) besitzt, und im äußeren Umfangsbereich desselben die Deckelfolie (11) durch Versiegeln mit dem Aufnahmebehältnis (9) verbunden ist.

17. Filter nach Anspruch 16, dadurch gekennzeichnet, daß das Stützbehältnis (1) mit seinem umlaufenden Rand (3) auf dem Ringkragen (12) außerhalb des Siegelbereiches (13) aufliegt.

18. Filter nach Anspruch 16 oder 17, dadurch gekennzeichnet, daß der Siegelbereich (13) eine Spaltbreite von ca. 3 bis 4 mm besitzt.

FIG. 2

FIG. 1

4629